# EUROPEAN PATENT APPLICATION

(11) **EP 3 323 726 A1**
(43) Date of publication of application: **23.05.2018**
(21) Application number: 16382545.8
(22) Date of filing: 22.11.2016
(51) Int. Cl.: B64D 13/00, B64D 29/02, B64C 7/00

(54) **AN AIRCRAFT WITH TURBOPROP ENGINES HAVING ACTIVE MEANS TO AVOID DAMAGES CAUSED BY ICE IMPACTS**

(71) Applicant: Airbus Defence and Space SA, 28906 Getafe Madrid (ES)
(72) Inventor: Tejedor Foguet, Sergio, 28906 Getafe (ES); Atares Rodríguez, Julio, 28906 Getafe (ES)
(74) Representative: Elzaburu S.L.P.

(57) **Abstract**

The invention provides a turboprop engine (13) comprising a bleed system that includes handling bleed valves with discharging outlets (21) at the atmosphere having a dome-shaped cap (31) with a set of first orifices (33) for dispersing debris expelled through them. The invention also provides an aircraft (11) with turboprop engines (13) arranged inside nacelles (17) being the first orifices (33) of the dome-shaped caps (31) of the discharging outlets (21) sized to prevent damages caused by impacts of ice debris in an adjacent nacelle (17) or in the aircraft fuselage.

## Description

### FIELD OF THE INVENTION

The invention relates to turboprop engines and to the protection of aircraft with turboprop engines from ice impacts and, particularly, from impacts of ice debris expelled by the handling bleeds valves of the turboprop engines.

### BACKGROUND

To avoid damages produced in aircraft by ice impacts, no matter which their origins are, the prior art teaches the addition of armor of different types (metallic or composite additional protections) in the areas identified as at risk.

It is known, for example, the use of panels of Corrosion Resistant Steel (CRES321) or Kevlar in the engine nacelles or specific protective shields in order to protect them from ice impacts.

For example, EP 2 581 189 A2 describes a protective shield against ice impacts on aircraft. The protective shield is made of composite material having microcapsules containing a healing agent. When a crack produced on the shield reaches at least a microcapsule, the healing agent is spilled in the delaminated area. Some catalyst particles can be included in the material and in that case, the healing agent is polymerized reacting with the catalyst particles. If no catalyst particles are included in the material, the healing agent may also actuate when manually heated. Such kinds of material allow recovering at least partially the impact strength of the shields after impact, which is particularly important in case of ice impacts that can be repetitive during operations in icing conditions. Therefore, the prior art solutions have not been headed to avoid the impacts but to mitigate their effects adding protective shields or other kind for armor in the affected area which involves significant increases of costs and weight.

The present invention is directed to solving that problem.

### SUMMARY OF THE INVENTION

In a first aspect, the invention refers to turboprop engines comprising a bleed system that includes handling bleed valves with discharging outlets at the atmosphere. The invention provides said turboprop engines with discharging outlets comprising a dome-shaped cap with a set of first orifices for dispersing ice debris expelled through them.

In an embodiment the first orifices are sized to only permit the pass of ice debris with a predetermined kinetic energy.

In an embodiment, the dome-shaped cap further comprises a set of second orifices of lesser size than the first orifices to maximize its exhaust area.

In a second aspect, the invention refers to an aircraft with said turboprop engines arranged inside nacelles being the first orifices of the dome-shaped caps sized to prevent damages caused by impacts of said ice debris in an adjacent nacelle or in the aircraft fuselage.

In an embodiment, the first orifices are sized to only permit the pass of ice debris with a kinetic energy lesser than 8J.

Other desirable features and advantages of this invention will become apparent from the subsequent detailed description of the invention and the appended claims, in relation with the enclosed drawings.

### BRIEF DESCRIPTION OF THE DRAWINGS

Figure 1 is a side view of an A400M aircraft.
Figure 2 is a cross sectional view of an engine of an A400M aircraft.
Figures 3a and 3b are schematic lateral views of two nacelles of an A400M aircraft showing the location of ice impacts caused by ice debris expelled by a discharging outlet of a handling bleed valve located in an adjacent engine nacelle and expected projections of the handling bleed valves.
Figures 4a and 4b are external and internal views of the cap of a discharging outlet of a handling bleed valve illustrating an embodiment of the invention.
Figures 5a and 5b are external and internal views of a discharging outlet of a handling bleed valve with the cap installed in it illustrating an embodiment of the invention.

### DETAILED DESCRIPTION OF THE INVENTION

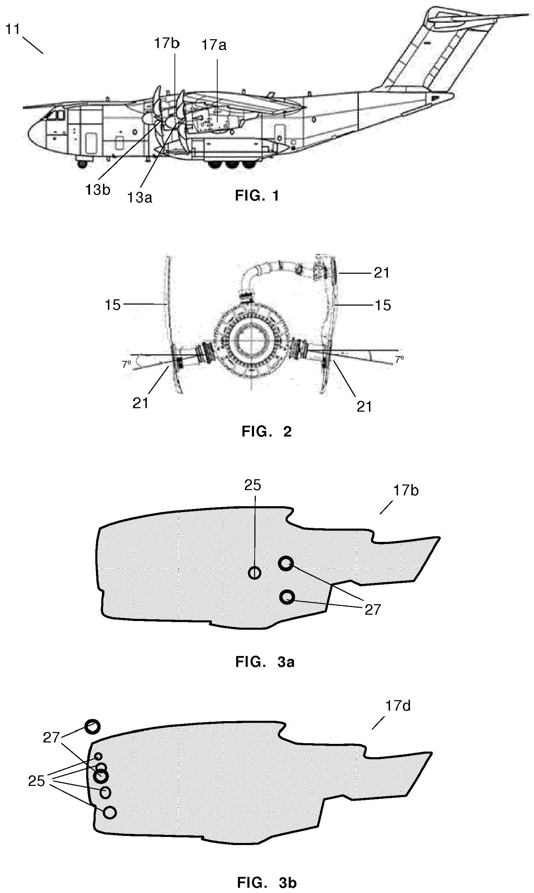

In the case of an aircraft 11 such as the A400M with four turboprop engines 13 (engines 13a, 13b in the left side in the flight direction) it has been found that the main cause of damages produced by ice impacts in the cowlings 15 of the four engine nacelles 17 (nacelles 17a, 17b in the left side and nacelles 17c and 17d in the right side in the flight direction) and in the fuselage areas close to the engines are ice pieces expelled through the discharging outlets 21 of the handling bleed valves located at both sides of each nacelle (see Figure 2).

Moreover it has been found that said ice impacts are produced in different locations than the projections of the handling bleed valves as shown in Figures 3a and 3b for ice impacts 25 in nacelles 17b and 17d located in a different position than the projections 27 of the handling bleed valve located in the contiguous side of nacelles 17a and 17c.

In order to avoid said damages, the discharging outlets 21 of the handling bleed valves comprise a dome-shaped cap 31 with a set of first orifices 33, preferably of circular shape, sized to only permit the pass of ice debris with a kinetic energy which is not dangerous in terms of structural damage of the nacelle cowlings 15 (which are less impact resistant and damage tolerant than the aircraft fuselage). On the other hand, the dome shape of the cap 31 contributes to a spatial dispersion of the ice debris. Orifices are sized considering the ice mass that they allow passing across the cap 31 and the velocity they have. In the case of the A400M, since the allowable impact energy that a nacelle cowling 15 made of Carbon Fibre Reinforced Plastic is able to withstand is around 10J, the first orifices 33 are sized so that the ice debris passing through them do not arrive to a nacelle cowling 15 or to the aircraft fuselage with more than 8J kinetic energy E_{c} (E_{c}=1/2mV²) , being m the mass an V the velocity of an ice debris projectile, avoiding any damage possibility.

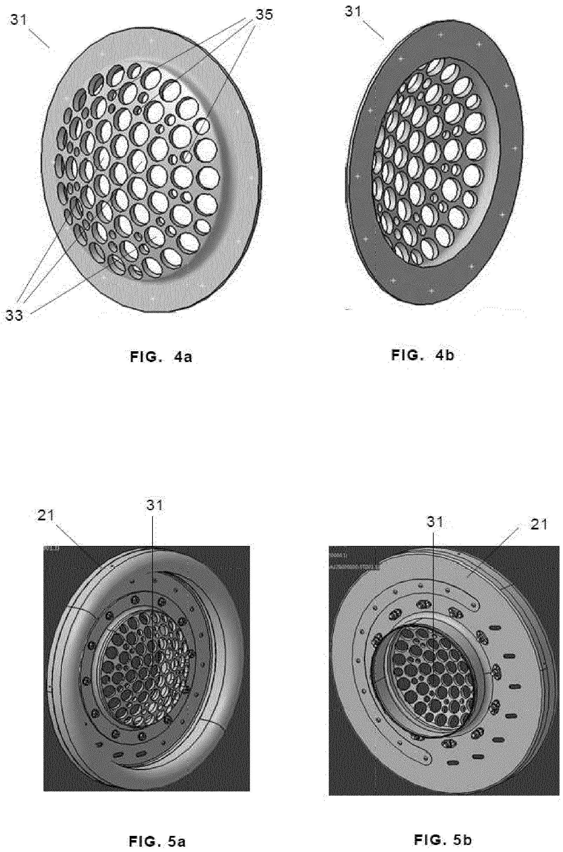

The dome-shaped cap 31 may also have a set of second orifices 35 of lesser size than the first orifices 33 to maximize as much as possible its exhaust area in order to reduce jet speed and internal pressure in the bellow of the handling bleed valve. The handling bleed valve diameter depends on the specific design of the engine and the number and the size of the orifices shall be defined considering both the kinetic energy threshold and the maximum discharge area, intending weight minimization and not affecting the engine performances. The design shown in Figures 4a-5b has an optimum compromise between the kinetic requirement and the installation constraints.

The invention is therefore intended to attack the cause of the damages caused by ice impacts instead of mitigating the risk adding heavy and expensive protections.

Among the advantages of the invention, the following can be highlighted:
- The dome-shaped cap 31 prevents large ice debris leaving the discharging outlet 21 of a handling bleed valve breaking the ice accreted into the bellow of the handling bleed valve in several smaller parts.
- The dome-shaped cap 31 guarantees that the kinetic energy of the expelled ice debris is not enough to cause damage on the nacelle cowlings 15 or the aircraft fuselage.
- The implementation of the cap 31 permits significant cost and weight savings due to the reduction of the parts and materials usage, the simplification of production, installation and maintenance tasks and the mitigation of the risk of damages.

Although the present invention has been described in connection with various embodiments, it will be appreciated from the specification that various combinations of elements, variations or improvements therein may be made, and are within the scope of the invention as defined by the appended claims.

## Claims

1. Turboprop engine (13) comprising a bleed system that includes handling bleed valves with discharging outlets (21) at the atmosphere, wherein said discharging outlets (21) comprise a dome-shaped cap (31) with a set of first orifices (33) for dispersing ice debris expelled through them.

2. Turboprop engine (13) according to claim 1, wherein said first orifices (33) are sized to only permit the pass of ice debris with a predetermined kinetic energy.

3. Turboprop engine (13) according to any of claims 1-2, wherein the dome-shaped cap (31) further comprise a set of second orifices (35) of lesser size than the first orifices (33) to maximize its exhaust area.

4. Aircraft (11) with turboprop engines (13) according to any of claims 1-3 arranged inside nacelles (17), wherein the first orifices (33) of the dome-shaped cap (31) are sized to prevent damages caused by impacts of ice debris in an adjacent nacelle (17) or in the aircraft fuselage.

5. Aircraft (11) according to claim 4, wherein the first orifices (33) are sized to only permit the pass of ice debris with a kinetic energy lesser than 8J.
